# EUROPEAN PATENT APPLICATION

(11) **EP 2 549 730 A1**
(43) Date of publication of application: **23.01.2013**
(21) Application number: 12166273.8
(22) Date of filing: 01.05.2012
(51) Int. Cl.: H04N 1/00

(54) **Document processing job control via a mobile device**

(30) Priority: 18.07.2011 US 201113185443
(71) Applicant: Ricoh Company, Ltd., Tokyo 143-8555 (JP)
(72) Inventor: Nuggehalli, Jayasimha, Cupertino CA 95014 (US); Hong, Jiang, Cupertino CA 95014 (US)
(74) Representative: Maury, Richard Philip

(57) **Abstract**

Techniques are provided for creating a document processing job without manually inputting information to a document processing device. A mobile device scans identification information of a document processing device, generates job settings data and sends them to a network service. In response to receiving the job settings data, the network service stores the job settings data in a repository, generates a job identifier, associates the job identifier with the job settings, and sends the job identifier to the mobile device. The mobile device receives the job identifier and sends it to the document processing device. The document processing device uses the job identifier to retrieve the job settings data from the network service. In response to receiving the job settings data, the document processing device processes one or more documents according to the job settings.

## Description

### BACKGROUND OF THE INVENTION

### 1. Field of the Invention

The present invention relates to allowing a mobile device to create a document processing job and store the job at a network service, and allowing a document processing device, such as a multi-functional peripheral, to retrieve the document processing job from the network service for processing.

### 2. Description of the Related Art

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

Conventional techniques for employing a multi-functional peripheral (MFP) to scan, print or to otherwise process data often require a user to authenticate to the MFP by manually providing a username and password via a display of the MFP. Upon a successful authentication, the user may be required to enter a job release code, input a job identifier, select the features and options from the MFP's display, and possibly enter some additional information before the MFP can commence executing the user's job. Performing these and other manual operations can be error-prone, tedious and time-consuming because many MFPs have simple user interfaces with limited functionality.

Moreover, a user may be unfamiliar with the graphical user interface that is specific to a particular MFP. Therefore, the process of navigating the unfamiliar interface can be difficult and disappointing.

### SUMMARY OF THE INVENTION

Techniques are provided for creating a document processing job without manually inputting information to a document processing device, such as a multi-functional peripheral (MFP). A mobile device scans encoded data of a document processing device, generates job settings data and sends them to a network service. The job settings data are associated with one or more job settings for a document processing job. In response to receiving the job settings data, the network service stores the job settings data in a repository, generates a job identifier, associates the job identifier with the job settings, and sends the job identifier to the mobile device. The mobile device receives the job identifier and sends it to the document processing device. The document processing device uses the job identifier to retrieve the job settings data from the network service. In response to receiving the job settings data, the document processing device processes one or more documents according to the job settings.

### BRIEF DESCRIPTION OF THE DRAWINGS

FIG. 1 is a block diagram that depicts an example architecture for processing document data, according to an embodiment of the invention.
FIG. 2 depicts an example operation panel of an MFP, according to an embodiment of the invention.
FIG. 3 is a flow diagram depicting communications exchanged between a document processing device, a mobile device and a network service according to an embodiment of the invention.
FIG. 4 is a flow diagram depicting an approach for utilizing encoded data and a job identifier according to an embodiment of the invention.
FIG. 5 is a block diagram that illustrates a computer system upon which an embodiment of the invention may be implemented.

### DETAILED DESCRIPTION OF THE PREFERRED EMBODIMENTS

In the following description, for the purposes of explanation, numerous specific details are set forth in order to provide a thorough understanding of the present invention. It will be apparent, however, that the present invention may be practiced without these specific details. In other instances, well-known structures and devices are shown in block diagram form in order to avoid unnecessarily obscuring the present invention.
1.0 OVERVIEW
2.0 SYSTEM ARCHITECTURE
   2.1 DOCUMENT PROCESSING DEVICE
   2.2 OPERATIONAL PANEL OF A DOCUMENT PROCESSING DEVICE
   2.3 NETWORK SERVICE
   2.4 MOBILE DEVICE
   2.5 JOB IDENTIFIER
3.0 COMMUNICATIONS UTILIZING ENCODED DATA
4.0 USING A JOB IDENTIFIER
5.0 IMPLEMENTATION MECHANISMS

### 1.0 OVERVIEW

An approach is provided for utilizing encoded data of a document processing device to identify the features and options currently available on the document processing device and to utilize network interface data for the document processing device to transmit a job identifier to the document processing device.

### 2.0 SYSTEM ARCHITECTURE

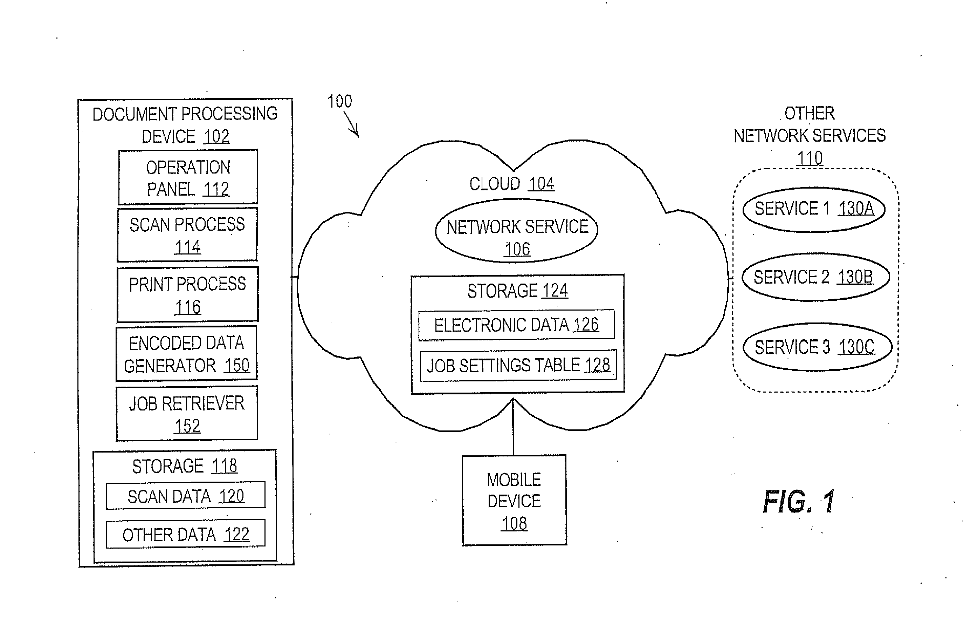

FIG. 1 is a block diagram depicting example system architecture 100 for utilizing encoded data of a document processing device according to an embodiment of the invention. Architecture 100 includes a document processing device 102, a cloud 104, a mobile device 108, and other network services 110 that are communicatively coupled to cloud 104. For illustration purposes only, other network services 110 include external services 130A-C, which may provide storage and repository capabilities for storing, archiving and organizing electronic documents. However, embodiments of the invention are not limited to the external services 130A-C. There may be any number (or none) of other network services 110 that are communicatively coupled to cloud 104.

The communications links between cloud 104 and each of document processing device 102, mobile device 108, and other network services 110 may be implemented by any medium or mechanism that provides for the exchange of data between the elements of FIG. 1. Examples of such links include, without limitation, a network such as a Local Area Network (LAN), Wide Area Network (WAN), Ethernet or the Internet, or one or more terrestrial, satellite or wireless links.

### 2.1 DOCUMENT PROCESSING DEVICE

Document processing device 102 is a network device that is configured to communicate with a network service 106 in cloud 104 and process various document data. Document processing device 102 can be a multi-functional peripheral (MFP) 102, and can be configured to perform printing, scanning, faxing and other types of document processing.

For example, MFP 102 may be configured to scan one or more printed documents and generate scanned document data that represent one or more electronic document data. The scanned document data may be in a variety of formats, depending upon a particular implementation. One example format is the portable document format (PDF) by Adobe Systems, Inc. MFP 102 may also be configured to convert scanned document data from a non-text format, such as PDF, to a text-based format, using various data conversion techniques, such as optical character recognition (OCR) method. MFP 102 can further be configured to transmit the scanned document data to another location, such as storage 124 of network service 106, over a communications link established between MFP 102 and cloud 104.

In an embodiment, document processing device 102 implements the capability to process electronic document data stored in storage 118. Document processing device 102 can also be configured to download the electronic document data from storage 124 of network service 106 to storage 118.

In FIG. 1, document processing device 102 includes an operation panel 112, a scan process 114, a print process 116, encoded data generator 150, job retriever 152 and storage 118. The operation panel 112 is configured to display information to a user and to accept user input.

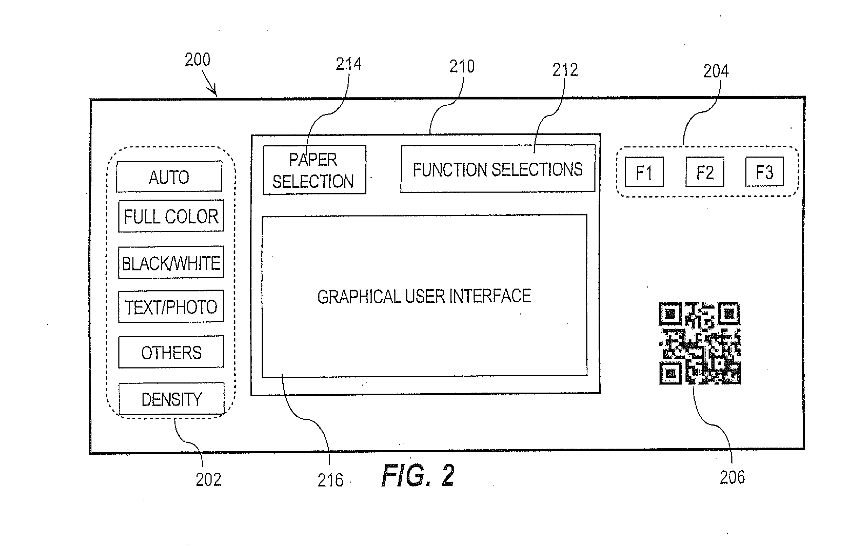

Implementations of operation panel 112 may vary depending upon architecture of document processing device 102. In an embodiment, operation panel 112 can include a screen having a touch-screen portion, on which a graphical user interface (GUI) can be displayed. The touch screen can allow a user to select icons and GUI objects on the GUI. The GUI may be updated to reflect changes in the functionalities offered by the document processing device 102. The operation panel 112 may also include control buttons and a numeric keypad for receiving user input. Example of operation panel 112 is described in more detail below with reference to FIG. 2.

Scan process 114 is configured to cause one or more printed documents to be scanned by document processing device 102 and to generate scanned document data that represent the one or more printed documents. Scan process 114 may be initiated, for example, in response to a user's selection of a scan-start control button (not depicted in FIG. 1).

Print process 116 is configured to cause one or more documents to be printed by document processing device 102 based on corresponding electronic document data. Print process 116 may be initiated, for example, in response to a user's selection of a print-start control button (not depicted in FIG. 1), or in response to a document processing device completing a download of the electronic document data and user's selections of the features and options associated with the electronic document from network service 106.

In an embodiment, to enable printing a particular printing job, print process 116 retrieves information specific to a printing job. Such information can include print setting selection data and electronic document identification data. The print setting selection data provides description of the features and options that document processing device 102 should apply while performing the printing job. The electronic document identification data comprises information identifying an electronic document to be printed by document processing device 102. For example, the electronic document identification data may comprise the electronic document name, a web link to the electronic document data, a pointer to the electronic document data, or any other information that allows document processing device 102 to retrieve and download the electronic document data to storage 118.

Print process 116 is configured to download electronic document data to storage 118, and in particular, to the part of storage 118 labeled on FIG. 1 as other data 122. The electronic document data can be downloaded to storage 118 from storage 124, from storage associated with external network services 110, or any other storage available to document processing device 102.

Encoded data generator 150 is configured to generate and display encoded data specific to document processing device 102. For example, the encoded data can be used to allow other devices, such as mobile device 108, to identify document processing device 102, to determine the capabilities of document processing device 102, and to provide network interface data to allow mobile device 108 to transmit a job identifier to the document processing device 102.

The encoded data may be encoded in a wide variety of data format and may be generated using a variety of data encoding techniques, depending upon a particular implementation. For example, the encoded data can be encoded using a quick response (QR) code technique.

A Quick Response (QR) code is a two dimensional code for representing data in a graphical form. The data are encoded to strings containing ones and zeros, and the strings are represented graphically as rows and columns containing black and white pixels. For example, a QR code may utilize a two-dimensional array of pixels, wherein each pixel can have associated one of two Boolean values. For example, if, according to the coding, a particular pixel has associated the Boolean value of "1," then the pixel is filled with a black rectangle or square. However, if, according to the coding, a particular pixel has associated the Boolean value of "0," then the pixel is filled with a white rectangle or square. Using the coding, the rows and columns of the two-dimensional array are filled with black and white rectangles, and groups of the pixels are interpreted as the encoded data. Other combinations of associations between the Boolean values and colors of the rectangles are also contemplated.

In other embodiment, encoded data can be a bar code, in which data are encoded to a string containing ones and zeros, and the strings are represented graphically as a row of black and white bars. The encoded data can also be represented by one or more symbols, one or more alphanumeric characters, or any other form of coding.

In an embodiment, encoded data generator 150 is configured to generate encoded data to represent specific information, and to display the encoded data to make the encoded data available to other devices.

In an embodiment, encoded data represent a) features and options currently supported by document processing device 102, and b) network interface data for document processing device 102, wherein the network interface data can allow mobile device 108 to transmit a job identifier to document processing device 102.

Encoded data generator 150 encodes the features and options that are currently supported by document processing device 102 and displays the encoded data to allow other devices to determine the capabilities of document processing device 102. Examples of the features and options currently supported by document processing device 102 include, without limitation, printing features and options (duplex option, finisher features, the types of paper format that are available on document processing device 102), the types of formatting that are available on document processing device 102, color or black/white printing, collate or not-collate, document scanning features and options and other capabilities specific to the document processing device 102.

Encoded data generator 150 encodes network interface data for document processing device 102 to allow mobile device 108 to transmit a job identifier (described below) to document processing device 102. Examples of network interface data can comprise a uniform resource identifier (URI) of network service, an email address of network service, etc.

The network interface data can be used by mobile device 108 to establish a communications link with document processing device 102 and to transmit the job identifier to document processing device 102. For example, mobile device 108 can use the network interface data, such as a uniform resource identifier (URI), to invoke a web page or a web application of document processing device 102 and enter the job identifier to the respective web page. According to another example, the network interface data can provide an email address of document processing device 102 and send the job identifier to document processing device 102 by email.

In an embodiment, encoded data can also comprise data that allow other devices, such a mobile device 108, to authenticate to document processing device 102. For example, the encoded data can comprise an application programming interface (API) key for validating a client access to document processing device 102 when document processing device 102 requires a client's authorization. For example, document processing device 102 can be a secure device that grants access only if the clients are successfully authorized to an authorization server (not depicted in FIG. 1). The authorization server can be communicatively coupled to document processing device 102. The API key can be used by mobile device 108 before mobile device 108 can gain access to document processing device 102.

Other types of data specific to document processing device 102 can also be included in the encoded data.

In an embodiment, encoded data also comprise data that are specific to network service 106. For example, the encoded data can comprise an application programming interface (API) key for validating a client access to cloud 104 and network service 106 when cloud 104 and network service 106 require client's authorization. For example, network service 106 can be a secure process that grants access only if the clients are successfully authorized to an authorization server (not depicted in FIG. 1). The authorization server can be communicatively coupled to cloud 104. The API key can be used by mobile device 108 before mobile device 108 can gain access to network service 106.

Encoded data generator 150 can repeat the encoding and regenerating encoded data for a variety of reasons. For example, encoded data generator 150 can repeat the encoding and regenerating encoded data when document processing device 102 is relocated to another network, another physical location or altered in any way that requires a change in network interface data, such as an URI of document printing device 102. In such a situation, updated network interface data are generated, provided to encoded data generator 150 and used to regenerate the encoded data to reflect the updated network interface data of document processing device 102.

According to another encoded data generator 150 can regenerate the encoded data when an API key to validate a client's access to document processing device 102 is changed and the old method, included in the old encoded data, for establishing a communications link with the document processing device 102 is obsolete. In such a situation, encoded data generator 150 can be provided with the updated API key for document processing device 102 and regenerate the encoded data to reflect the updated method for establishing a communications link with the document processing device 102.

According to another example, encoded data generator 150 can repeat the encoding and regenerating encoded data when document processing device 102 has been upgraded and the features and options of the upgraded document processing device 102 have changed. For example, document processing device 102 can be upgraded to provide additional features that were not available when the old encoded data were generated. In such a situation, encoded data generator 150 can be provided with the updated information about the features and options currently supported by the updated document processing device and regenerate the encoded data to reflect the updated features and options currently supported by the updated document processing device.

In an embodiment, encoded data comprise information about all the features and options that are currently supported by document processing device 102. Therefore, by acquiring the encoded data and decoding the encoded data, other devices, such as mobile device 108, can determine the capabilities of document processing device 102, and can generate a graphical user interface (GUI) that is specific to document processing device 102.

In an embodiment, document processing device 102 displays encoded data on operation panel 112 for other devices to read, scan or retrieve, and process. For example, the encoded data may be displayed on operation panel 112 as an electronically generated light-emitting diode (LED) display, or as a sticker affixed to the operation panel 112, a wireless signal emitted by document processing device 102, or displayed using any other method facilitating providing the encoded data to other devices.

The encoded data can be acquired by other devices, such as mobile device 108, using a variety of techniques. For example, the encoded data displayed by document processing device 102 can be scanned by a scanner of mobile device 108, and interpreted by mobile device 108 using the same encoding schema that encoded data generator 150 used to generate the encoded data. According to another example, the encoded data can be photographed by a camera of mobile device 108, and interpreted by mobile device 108. According to other example, the encoded data, emitted by an infra-red emitter of document processing device 102, can be captured by an infra-red sensor of mobile device 108. According to other example, the encoded data, transmitted using a wireless signal transmitter of document processing device 102, can be received by a wireless signal receiver of document processing device 102. Other methods of acquiring the encoded data of document processing device 102 by mobile device 108 are also contemplated.

Job retriever 152 is configured to allow document processing device 102 to establish a communications link with network service 106, provide a job identifier to network service 106, requesting job settings data associated with the job identifier, and downloading the job settings data from network service 106 to document processing device 102.

In an embodiment, job retriever 152 establishes a communications link with network service 106 by using a web browser application, described in detail below.

Storage 118 may be any combination of volatile or non-volatile storage for storing data used by document processing device 102. For example, storage 118 may be random access memory (RAM), one or more disks, or any combination of RAM and one or more disks for storing scanned document data. As depicted in FIG. 1, storage 118 may store scan data 120 and other data 122. Other data 122 may include electronic document data or other types of data, such as word processing document files.

Document processing device 102 may include other modules and processes that are not depicted in FIG. 1 for purposes of brevity.

### 2.2 OPERATIONAL PANEL OF A DOCUMENT PROCESSING DEVICE

FIG. 2 depicts an example operation panel 200 of document processing device 102. Operation panel 200 includes a set of user interface controls 202 for activating functions of document processing device 102. The user interface controls on operation panel 200 may be graphical, non-graphical, or a combination of graphical and non-graphical.

Operation panel 200 may be arranged in many different ways and the arrangements depend on the implementation of document processing device 102. For example, as depicted in FIG. 2, operation panel 200 may have job settings buttons 202 (such as an automatic default setting control, full color setting control, black and while setting control, text/photo setting control, density setting control, and others), paper selection buttons 214, function selection buttons 212, additional function buttons 204, graphical user interface 216 and encoded data display 206.

The functions implemented on any particular document processing device 102 may vary depending upon the implementation of document processing device 102. For example, if a particular document processing device 102 is a multi-functional peripheral (MFP), then the functions of document processing device 102 can include printing, copying, scanning, connecting to a document server, faxing and other functions.

In an embodiment, operation panel 200 can also include a numeric keypad, and a set of user controls for toggling the power, starting a function, and clearing the current function (not shown in FIG. 2). These are examples of the user controls that are typically included on a MFP. More or fewer user controls may be provided, depending upon a particular implementation of document processing device 102.

Operation panel 200 can also include a graphical user interface (GUI) 216 for displaying information and receiving user input. GUI 216 may be a touch screen that is capable of detecting user selection of icons and GUI objects displayed on GUI 216. GUI 216 can be stored on document processing device 102 and loaded directly from local storage 118 of document processing device 102.

In an embodiment, GUI 216 is generated based on the features and options for the features that are specific to document processing device 102.

Encoded data display 206 can represent encoded data that identify document processing device 102, features and options specific to document processing device 102 and network interface data for establishing a communications link with network service 106. The encoded data display 206 is used to communicate the encoded data to other devices, such as mobile device 108. For example, encoded data display 206, displaying the encoded data, can be scanned by a scanner of mobile device 108. Scanning of the encoded data displayed in encoded data display 206 allows mobile device 108 to acquire information identifying document processing device 102, information identifying the features and options of document processing device 102 and information identifying methods for establishing a communications link with network service 106 to retrieve one or more printing jobs for document processing device 102.

Encoded data may be encoded using a variety of formats. Example formats include, without limitation, a quick reference (QR) code, a two-dimensional array of black and white pixels that uniquely represent a piece of information. The encoded data can also be encoded as a bar code, one or more symbols, one or more alphanumeric characters, or any other encoding techniques known in the art.

Encoded data display 206 can be an electronic LED display projecting an electronic display of the encoded data, a sticker affixed to operation panel 200 containing printed encoded data, a display generated by an infra-red signal emitter, a signal generated by a wireless signal emitter generating the encoded data, or any other form of display configured to communicate the encoded data to other devices.

### 2.3 NETWORK SERVICE

Referring again to FIG. 1, in an embodiment, a network service 106 is a part of a separate network 104, referred herein as a cloud 104. Alternatively, network service 106 may be implemented on a standalone computer that is communicatively coupled with document processing device 102 and mobile device 108.

A "cloud" is a computing system communicatively coupled to document processing device 102 and mobile device 108, and configured to provide one or more of processing resources, storage resources and other computing services, or any combination thereof, to document processing device 102 and mobile device 108, for example via a web browser.

In an embodiment, from the perspective of document processing device 102 and mobile device 108, cloud 104 can be viewed as a collection of services and a data repository. At the hardware level (although transparent to document processing device 102 and mobile device 108), cloud 104 comprises one or more network devices that host a plurality of services.

The services offered by cloud 104 are accessible to document processing device 102 and mobile device 108 via the Internet using any of the data communications protocols, such as the Transmission Control Protocol (TCP), the Internet Protocol (IP), and other protocols. Each of the services in cloud 104 may be associated with a different communications protocol, a different IP address and/or port number.

Cloud 104 may be maintained by a single individual user or an organization, such as a company, an association, a university, or other entity. An example of a cloud is the VACS (Value-Added Cloud Solution) provided by Ricoh Company, Ltd.

Multiple organizations can share responsibility for maintaining a particular cloud. A network service "outside" of cloud 104, such as any of external network services 110 in FIG 1, can be provided by one or more individual users or organizations that are different than any individual user or organization that maintains could 104. Thus, other network services 110 are considered "third-party services" relative to the services in cloud 104.

In FIG. 1, cloud 104 includes a network service 106 or a plurality of network services 106. Network service 106 can be configured to receive job settings data from mobile device 108, process the received job settings data if necessary, store the job settings data in a repository, associate a job identifier (described below) with the stored job settings data, and send the job identifier to mobile device 108.

In an embodiment, network service 106 is a web-based browser that communicates, using for example HTTP, with other cloud services, other network services 110, and network devices, such as mobile device 106 and document processing device 102. Network service 106 can be a document processing network service that receives job settings data, processes the job settings data (converts electronic documents, translates electronic documents, etc.), and makes the processed job settings data available to other services and devices.

Non-limiting examples of network service 106 can include Box.net^{™}, Google Docs^{™}, Salesforce.com^{™}, Evernote^{™}, and Jigsaw^{™}.

Cloud 104 may also include an OCR service (not shown) for converting scanned document data in non-text format, for example PDF, into text-based format. Cloud 104 may also include a forwarding service (not shown) for transmitting scanned document data in text format to one or more recipients. The OCR service and the forwarding service may be implemented as part of network service 106. Alternatively, the OCR service and the forwarding service may be implemented separately from network service 106. For example, the OCR service and the forwarding service can be implemented as one of other network services 106.

In an embodiment, cloud 104 also comprises storage 124, divided into two or more parts, such as electronic document data storage 126 and job settings table 128. Electronic document data storage 124 stores electronic document data that comprise document data, such as text data. Electronic document data storage 124 can also store pointers to documents, document data links, and other document data identification information that can be used to identify and download the document data. For example, mobile device 108 can store a web link to a document that a user of mobile device 108 would like to print on document processing device 102. Network service 106 can retrieve the web link from electronic document data storage 126, use the web link to retrieve the particular document data and download the particular document data to storage 118.

In an embodiment, job settings table 128 stores job settings data that indicate the specific features and options for the features of document processing device 102 that a user of mobile device 108 selected as appropriate for processing an electronic document data by document processing device 102. For example, the job settings data can include information that the particular electronic document should be printed in a landscape format, on an A4-format paper, as a black and white printed document.

Storage 124 may be implemented as any type of volatile or non-volatile storage for storing data used by network service 106. For example, storage 124 may be random access memory (RAM), one or more disks, or any combination of RAM and one or more disks for storing scanned document data.

### 2.4 MOBILE DEVICE

Mobile device 108 is communicatively coupled with cloud 104 and other devices in system 100. In an embodiment, mobile device 108 communicates with cloud 104 by providing, to cloud 104, job settings data, including features and options to be used in processing a document by document processing device 102.

Mobile device 108 may be implemented as any type of device equipped with wireless-communication capabilities, capabilities to generate, display and interact with a graphical user interface, capabilities to access the Internet, and other capabilities specific to the mobile device technology. Non-limiting examples of mobile device 108 include, without limitation, cellular telephony devices such as smart phones, iPhones, cell phones, personal digital assistants (PDAs), and tablet devices.

Mobile device 108 can be configured to display, on a touch screen display, a series of graphical displays, each of which provides a user with choices, and each of which is configured to accept the user's selection and to communicate the user's selections to other applications residing on mobile device 108.

In an embodiment, mobile device 108 hosts one or more applications facilitating communications with mobile device 108 and facilitating execution of various tasks. For example, mobile device 108 can host an interface application that allows a user to authenticate to mobile device 108, an application that allows scanning information from document processing device 102, an application that allows communicating with cloud 104, and other applications that allow communicating with other devices in system 100. Alternatively, mobile device 108 can execute one robust application that is designed to provide a variety of services, including the services described above.

In an embodiment, mobile device 108 executes an application that causes prompting a user of mobile device 108, via a user interface, to enter authentication information, such as a username and password. Once the authentication information is entered, the user is not required to re-enter the authentication information as long the user's session is active. The authentication information may be stored, for example persistently, on mobile device 108. Thus, if, subsequently, the user attempts to access one or more services in cloud 104, then another application or applications can retrieve the already provided authentication information and send the authentication information to cloud 104.

In an embodiment, mobile device 108 executes a web browser application that causes scanning or photographing encoded data displayed by document processing device 102. The scanned encoded data of document processing device 102 comprise information about features and options available on document processing device 102. The encoded data can also comprise network interface data that provide methods for communicating with document processing device 102. Moreover, the encoded data of document processing device 102 can comprise authentication information for validating access to document processing device 102.

In an embodiment, mobile device executes a web browser application that causes generating a graphical user interface (GUI) to display the features and options of document processing device 102. The web browser application can also be configured to receive a user's selection of the electronic document to be processed and a user's selection of the features and their corresponding options to be used in processing the electronic document on document processing device 102.

The user's selections of the electronic document to be printed and the features and options for the respective features to be utilized in processing the electronic document can also be referred to as job settings data.

In an embodiment, the web browser application of mobile device 108 can also be configured to cause sending job settings data to network service 106 in cloud 104. Upon receiving the job settings data, network service 106 can associate a job identifier to the job settings data, store the job settings data in association with the job identifier and send the job identifier to mobile device 108.

Because more than one set of job settings data can be submitted to network service 108, network service 106 generates and assigns a unique job identifier to each individual set of job settings data. A job identifier uniquely identifies particular job settings data submitted to network service 108. Network service 106 uses the job identifier to identify the job settings data, and provides the job identifier to mobile device 108 for the mobile device 108 to transmit the job identifier to document processing device 102. Document processing device 102 uses the job identifier to retrieve the job settings data from network service 106.

In an alternative embodiment, the above steps are performed by an application that is not a web-based browser. Such an application may comprise various modules for scanning encoded data displayed by document processing device 102, processing the scanned data, generating and displaying a graphical user interface (GUI) for depicting the features and options currently available on document processing device 102, accepting the user's selections of the features and options, accepting the user's selection of an electronic document for processing, establishing a communications link with network service 106 and sending the job settings data to network service 106. In such an embodiment, any updates to the application can be distributed to each mobile device individually and configured on each mobile device individually. In contrast, with a browser-based implementation, such updates may not be required. Instead, any updates to a web browser-based application may be distributed when each of the mobile devices establishes a communications link with the network service or distributed in a form of a broadcast to the mobile devices.

In an embodiment, mobile device 108 is equipped with a scanner or a camera to acquire encoded data displayed by document processing device 102. For example, a scanner of mobile device 108 is configured to scan the encoded data displayed by document processing device 102. Alternatively, a camera of mobile device 108 can be used to photograph the encoded data displayed by document processing device 102. The scanned or photographed encoded data can be communicated to an encoded data processing application of mobile device 108. Other methods of acquiring the encoded data are also contemplated.

In an embodiment, the encoded data comprise features and options that are currently available on document processing device 102. Furthermore, the encoded data can comprise network interface data that provide information necessary for establishing a communications link with document processing device 102, and optionally an API key, as described above.

In an embodiment, an application executed on mobile device 108 causes one or more selectable icons to be displayed, each of which is associated with a different service. For example, one selectable icon may correspond to printing, another selectable icon may correspond to scanning, and another selectable icon may correspond to faxing.

In an embodiment, the information that is displayed on a screen of mobile device 108 is personalized to the user of mobile device 108. The personalization of the displayed information may be based on previous interactions (such as generating previous job settings data) between mobile device 108 and cloud 104. For example, if a user has generated job settings data in connections with one or more previous document processing jobs, then the application can display on option to select that job settings data without having to repeat the selection process. Previously entered job settings data may be stored on mobile device 108 and accessible to the application executing on mobile device 108.

Alternatively, the job settings data may be stored in cloud 104 (for example in storage 124) in association with a job identifier generated by network service 106.

In an embodiment, the application of mobile device 108 uses the features and options currently available on selected document processing device 102 to generate a graphical user interface (GUI) to display the printer-specific features and options. While the features and options displayed in the GUI are specific and unique to the selected document processing device 102, the overall design of the GUI may be consistent with the preferences previously selected by the user of mobile device 108. The overall consistency of the GUI design can be maintained by mobile device 108 until the user changes the preferences.

The purpose of maintaining the overall consistency of the GUI design is to provide the GUI with which the user is familiar and comfortable, and which has a consistent look-and-feel to the user. While the features and options displayed in the GUI are specific to the selected document processing device 102, the overall design of the GUI is the same regardless of which document processing device is selected from a plurality of document processing devices. Since the user is familiar with the overall design of the GUI, the user can more effectively navigate through the features and options, even if the features and the options are specific to one of the document processing devices from the plurality of the document processing devices.

In an embodiment, the application of mobile device 108 receives a user's selections entered by the user using the GUI. The application stores the selections, processes them and communicates them as job settings data to, for example, network service 106.

In an embodiment, in response to sending job settings data to network service 106, the application of mobile device 108 receives a job identifier from network service 106. The job identifier is generated by network service 106 upon received job settings data and is associated with the received job settings data by network service 106. For example, if each of one or more mobile devices sends an individual set of job settings data to network service 106, network service 106 can generate a separate job identifier for each of the individual job settings data and associate the individual job identifier with the respective job settings data.

Upon receiving a job identifier, an application of mobile device 108 can send the job identifier to document processing device 102. At this point, from the perspective of mobile device 108, mobile device 108 has completed performing all the steps that mobile device 108 was required to perform with regard to the particular document processing job. At this point, mobile device 108 can proceed to execute other processes, including collecting and generating another set of job settings data.

Upon receiving a job identifier from mobile device 108, document processing data 102 can establish a communications link with network service 106, provide the job identifier to network service 106, and retrieve, from a repository of network service 106, the job settings data associated the job identifier. Once the corresponding job settings data are downloaded to document processing device 102, document processing device 102 can start executing the processing according to the job settings data.

### 2.5 JOB IDENTIFIER

In an embodiment, a job identifier is generated by network service 106 upon receiving job settings data from mobile device 108. A particular job identifier is a unique identifier that allows identifying a particular set of job settings data in a plurality of sets. For example, if mobile device 108 provided, to network service 106, a particular set of job settings data for a printing job of a particular electronic document, then network service 106 can generate a unique particular job identifier for the particular set of job settings data, associate the particular job identifier with the particular set of job settings data, store the association between the particular job identifier and the particular set of job settings data in a repository, and send the particular job identifier to mobile device 108.

A job identifier can be represented in a variety of ways. For example, a job identifier can be represented by a unique alphanumeric string, containing letters, digits and special characters. The string can have a fixed or variable length. According to another example, a job identifier can be a hexadecimal number, binary number or a number represented in any number-representation-notation. A job identifier can be transmitted with or without encryption, and using any type of data transmission protocol.

In an embodiment, network service 106 stores job identifiers and their corresponding job settings data in job settings table 128 in storage 124. Methods for storing the job identifiers and their corresponding job settings data can vary, and depend on the implementation of the storage 124 and the implementation of network service 106.

For example, job identifiers and their corresponding job settings data can be stored in a two-dimensional table, in which the rows are identified by unique job identifiers, and the columns comprise the unique job identifiers and their corresponding job settings data. Example of such a table is depicted in TABLE 1 below:

**TABLE 1**

| JOB IDENTIFIER | JOB SETTINGS |
|---|---|
| 12CFX | ... |
| 65GJK | ... |
| TTTFFF | ... |

TABLE 1 comprises three rows (one row for each document processing job) and two columns: (1) a job identifier column that identifies, for each document processing job, an identifier for the document processing job; and (2) a job settings column that stores, for each document processing job, specific job settings for the document processing job. For example, the job identifier "12CFX" can be associated with job settings data that correspond to printing job that requires that the electronic document DOCUMENT.DOC be printed in a landscape format on an A4 format paper, black and white; the job identifier "65GJK" can be associated with job settings data that correspond to scanning a manually fed document and storing the scanned document as an electronic document DOCUMENT.DOC; and the job identifier "TTTFFF" can be associated with job settings data that correspond to making ten copies of the electronic document DOCUMENT.DOC.

According to another example, job identifiers and their corresponding job settings data can be stored in multi-dimensional table, in which the rows are identified by unique job identifiers, and the columns comprise not only the unique job identifiers and their corresponding job settings data, but also additional data, such as user data, workflow data, device identifiers, etc. Example of such a table is depicted in TABLE 2 below:

**TABLE 2**

| JOB IDENTIFIER | JOB SETTINGS | USER DATA | WORKFLOW DATA | DEVICE IDENTIFIER |
|---|---|---|---|---|
| 12CFX | ... | | ... | MFP100 |
| 65GJK | ... | User200 passw2 | | 121.3.28.253 |
| TTTFFF | ... | UserHG | ... | |

TABLE 2 comprises three rows (one row for each document processing job) and five columns: (1) a job identifier column that identifies, for each document processing job, an identifier for the document processing job; (2) a job settings column that stores, for each document processing job, specific job settings for the document processing job; (3) a user data column that (optionally) identifies, for each document processing job, a user that created the document processing job; (4) workflow data column that (optionally) indicates, for each document processing job, a workflow for the document processing job; and (5) a device identifier column that (optionally) identifies, for each document processing job, a device (or class of devices) that is allowed to process the document processing job.

The job settings stored in the job settings column may be stored in any format, such as plain text or XML. The job settings in the job settings column may be stored in the same format as the job settings that are received (if any) from mobile device 108. As another example, the job settings in the job settings column may be stored in the format (e.g., a PDL, or page description language, format) that is required for the document processing device (e.g., MFP 102) that is to receive the document processing job.

Some of the columns in TABLE 2 may be optional. For example, any of the columns such as the USER DATA column, the WORKFLOW data column, and the DEVICE IDENTIFIER column can be optional. Any user data stored in the user data column may include the authentication information sent from mobile device 108 or may include any data that identify the user to cloud 104. Any data stored in the device identifier column may include an IP address and/or name of a document processing device, such as document processing device 102.

Although referred to as a table, job settings table 128 is not limited to a table implementation. In other implementations, job settings table 128 is not a table data structure; instead, job settings table 128 can be a linked list, a list of pointers to locations where respective data are stored, an XML object, or any other data structure configured to store data.

### 3.0 COMMUNICATIONS UTILIZING ENCODED DATA

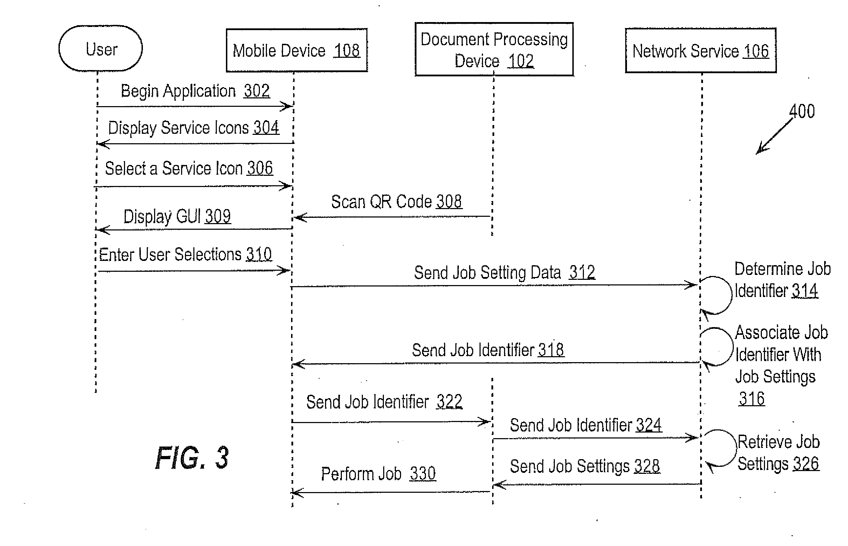

FIG. 3 is a diagram depicting communications exchanged between a mobile device 108, a document processing device 102, a network service 106 and other elements depicted in FIG. 1. In an embodiment, encoded data are displayed by document processing device 102, scanned/photographed by mobile device 108 and used by mobile device 108 to generate a graphical user interface (GUI). From the GUI, mobile device 108 receives entries indicating job settings data specific to a particular job, sends the job settings data to network service 106, receives a job identifier generated by network service 106 for the job settings data, and transmits the job identifier to document processing device 102. Upon receiving the job identifier from mobile device 108, document processing device 102 sends the job identifier to network service 106, retrieves the job settings data associated with the job identifier, and performs the particular job according to the job settings data.

In step 302, a user of mobile device 108 initiates the execution of a job processing application. For example, the user can select an icon representing the job processing application and launch the application. Optionally, initiating a job processing application can be dependent on successful authentication of a user to mobile device 108 and can require entering a valid username and password to mobile device 108 before the icon representing the job processing application is displayed on a screen of mobile device 108.

In step 304, in response to the user's initiation of the job processing application, the job processing application causes one or more service icons to be displayed on a screen of mobile device 108. The one or more service icons may include, for example, a print service icon, a copy service icon, a scan service icon, a fax service icon, and other icons associated with other services.

In step 306, the user selects one of the displayed service icons, and thus selects whether printing, copying, scanning, faxing or other service is required.

In step 308, in response to user selection of one of the displayed service icons, the application causes activating a scanner or a camera of mobile device 108 to scan or photograph encoded data displayed by document processing device 102. For example, the user can approach document processing device 102, point a scanner or a camera of mobile device 108 to the display of encoded data on document processing device 102, and press a button to activate the scanner or the camera to capture the encoded data displayed by document processing device 102.

In another embodiment, the encoded data can be acquired by utilizing an infra-red sensor for capturing an infra-red signal emitted by an infra-red emitter of document processing device 102. In other embodiment, the encoded data can be received by a wireless signal receiver of mobile device 108 that is configured to capture a signal transmitted by a wireless signal transmitter of mobile device 108. Other implementations of acquiring the encoded data are also contemplated.

The encoded data can represent various types of information. For example, the encoded data can represent a) features and options currently supported by document processing device 102, and b) network interface data for document processing device 102. The network interface data can be used by mobile device 108 to transmit a job identifier to document processing device 102. The network interface data can comprise one or more of: a uniform resource identifier (URI), an email address, a network address, or other information that mobile device 108 can use to communicate with document processing device 102. The encoded data can be encoded as one or more of: a quick response (QR) code, a bar code, symbols, and alphanumeric characters.

In an embodiment, the encoded data can also comprise an application programming interface (API) key comprising authentication information to validate access to document processing device 102.

In step 309, mobile device 108 processes the received encoded data, decodes the encoded data and extracts the features and options currently available on document processing device 102 from the decoded data. The features and options can, for example, specify the types of formatting available for a document printing, the types of paper formats available for a document printing, the types of finishing options available on document processing device 102, and other features and options for the respective features currently available on document processing device 102. Furthermore, in step 309, mobile device uses the features and options to generate and display a graphical user interface (GUI) on mobile device 108.

In an embodiment, a graphical user interface (GUI) presents to a user the features and options that are specific to document processing device 102; however the overall design of the GUI is consistent with the user's preferences and does not change when a different printing device is selected from a plurality of printing devices.

Maintaining the consistency of the overall design of the GUI allows displaying the GUI with which the user is familiar and which the user can navigate comfortably and efficiently. Even if the features and options change as the user selects a different printing device from the plurality of the printing device, the look-and-feel of the GUI displayed on the user's mobile device does not have to change.

In step 310, a user selects one or more features and one or more options for the selected features for a processing job that the user would like to have performed by document processing device 102. For example, the user can select that an electronic document should be printed on an A4 format paper, in a landscape format, one-sided, black-and-white and collated.

Furthermore, if the user selected printing, the user can also provide electronic document identification data that identify an electronic document that the user would like to have printed on document processing device 102. The user can provide the name of the electronic document that the user would like to print, a hyperlink to the electronic document that should be used to retrieve the electronic document for printing, or any other identifier that could be used to identify the electronic document to be printed.

In an embodiment, the user selected features and options and the user selected electronic document identification data are referred to as job settings data.

In step 312, the job settings data (user selected features and options and the electronic document identification data) are send to network service 106. The job settings data may be sent from mobile device 108 to network service 106 in any particular format, such as XML or a simple text.

In a related embodiment, instead of sending job settings data, the application of mobile device 108 can send to network service 106 a job settings identifier that is associated with one or more specific job settings. Thus, network service 106 can store associations between job settings identifiers and sets of one or more specific job settings.

It is assumed that the method for establishing a communications link with network service 106 is known to mobile device 108. For example, the method of communicating with network service 106 can be configured on mobile device 108 during a software installation of mobile device 108.

According to another example, the method of communicating with network service 106 can be provided to mobile device 108 when network service 106 is employed in system 100.

According to other example, the method of communicating with network service 106 can be provided by document processing device 102 in the form of encoded data that mobile device 108 can scan of document processing device 102. For example, the method of communicating with network service 106 can be extracted from the encoded data, and can be expressed in the form of a uniform resource identifier (URI) of network service 106, or an email address of network device 106. Other forms of providing the method of communicating with network service 106 can also be utilized.

In a situation when more than one network services 106 are available to mobile device 108, mobile device 108 can display a graphical user interface that allows a user of mobile device 108 to select one of many network services 106 and send the job settings data to the selected network service 106.

In step 314, in response to receiving the job settings data, network service 106 processes the received information and generates a unique job identifier for the received job settings data. The job identifier will be further used by mobile device 108 and document processing device 102.

Network service 106 can determine a job identifier in many different ways. For example, the job identifier may be generated in response to receiving the job settings data. Alternatively, the job identifier can be a pre-computed value that network service 106 retrieves from storage in response to receiving the job settings data.

A job identifier may comprise alphanumeric characters, non-alphanumeric characters, or any combination thereof. The job identifier uniquely identifies one or more specific job settings and, in the case of a print job, electronic document identification data. The one or more job settings (or job settings identifier) may be used to generate the job identifier. Alternatively, network service 106 may use a random number generator to generate the job identifier. Embodiments of the invention are not limited to any particular technique for determining a job identifier.

In step 316, network service 106 associates the job identifier with the respective job settings data and stores the association between the job identifier and the respective job settings data in a repository, such as storage 124, communicatively coupled with network service 106.

In step 318, network service 106 sends the job identifier to mobile device 108. The job identifier is the means that mobile device 108 (and document processing device 102) can use to reference the job settings data that are associated with the job identifier. In some respect, the job identifier may be viewed as a pointer to the location in a repository of network service 106 at which the respective job settings data are stored.

In step 322, mobile device 108 sends the job identifier received from network service 106 to document processing device 102. The purpose of sending the job identifier to document processing device 102 is to allow document processing device 102 to retrieve, from network service 106, the job settings data that correspond to the job identifier and initiate the document processing according to job settings data.

Also in step 322, mobile device 108 can use network interface data, extracted from encoded data read from document printing device 102, to determine the method of communicating with document printing device 102. For example, if the network interface data comprise a uniform resource identifier (URI) of document processing device 102, then mobile device 108 can use a web browser and the URI to send the job identifier to document processing device 102. According to another example, if the network interface data comprise an email address, then mobile device 108 can use an email application to send the job identifier to the email address of document processing device 102.

In an embodiment, if document processing device 102 is a secure device and allows access only to those clients that have been successfully authenticated to document processing device 102, then mobile device 108 needs to provide valid authentication credentials to document processing device 102 before mobile device 108 can send the job identifier to document processing device 102. For example, mobile device 108 can send an API key (described above) to gain access to document processing device 102, and then send the job identifier to document processing device 102.

In an embodiment, the steps 302-322 are repeated each time a user of mobile device 108 (or any other user of system 100) wishes to store a document processing job in a repository of network service 106. The job settings data are stored in storage of network service 106 and can be reused to repeat the same processing job and using the same features and options. Alternatively, the job settings data can be updated at least partially by, for example, updating the electronic document identification data, and used to repeat the same type of processing; however, with different electronic documents.

In step 324, document processing device 102 receives a job identifier from mobile device 108. Any time after that, document processing device 102 can establish a communications link with network service 106, transmit the job identifier to network service 106, and request the job settings data that correspond to the received job identifier.

Document processing device 102 can establish a communications link with network service 106 by using a universal resource identifier (URI) associated with network service 106 and provided to document processing device 102 in advance. According to another example, document processing device 102 can establish the communications link with network service 106 by sending an email to network service 106, using an email address provided to document processing device 102 in advance. Other methods of establishing communication with network service 106 are also contemplated.

In step 326, network service 106 receives the job identifier from document processing device 102 and retrieves job settings data that are stored in storage 124 of network service 106 in association with the received job identifier. If network service 106 cannot locate the job settings data associated with the particular job identifier, then an error can be generated and send to document processing device 102. However, if network service 106 was successful in locating the job settings data associated with the particular job identifier, then the corresponding job settings data are downloaded to document processing device 102.

In response to receiving the job identifier, DPN service 106 identifies one or more job settings based on the association between the job identifier and the one or more job settings. This identifying step may be performed by scanning the job identifier column of TABLE 1 (depicted above) until a row is found that has the same identifier as the job identifier received in step 326.

In step 328, network service 106 sends the job settings data to document processing device 102. The job settings data can be sent to document processing device 102 using any method of data transfer from one device to another, such as ftp, telnet, email, etc. Alternatively, document processing device 102 can poll the job settings information from a cache associated with network service 102.

In an embodiment, job settings data can be included in an HTTP response message generated by network service 106 and sent to document processing device 102. The one or more job settings sent to document processing device 102 may be in any particular format that is the same as or different than the format of the job settings data that are received from mobile device 108 in step 314. For example, the one or more job settings may be in a PDL (page description language) format. Specific examples of PDLs include PCL (Printer Command Language from HP), PDF (from Adobe), PostScript (from Adobe), and AFP (Advanced Function Presentation from IBM).

In an embodiment, in the print job context, network service 106 uses a printer driver to render an electronic document into data that document printing device 102 can process. For example, the electronic document can be expressed in a PDL. If network service 106 communicates with multiple types of printers that require different printer drivers, then network service 106 can have access to multiple printer drivers. Furthermore, if document processing device 102 cannot accept electronic document data in a PDL format, then network service 106 can retrieve the required printer driver, and then render an electronic document in the format that document processing device 102 can recognize.

In step 330, upon receiving the job settings data from network service 106, document processing device 102 stores the job settings data and initiates a job processing according to the job settings data.

The approach described herein for creating and processing a document processing job provides a beneficial workflow for users. The approach allows a user to enter authentication information into his/her mobile device once, and does not require reentering the authentication information each time the user operates a document processing device, such as an MFP.

The approach also allows a user to interact with a user-friendly and visually appealing interface displayed by the user's mobile device. For example, user interfaces on mobile devices are in color while MFP user interfaces tend to be in black and white, and hence, rather unappealing. Moreover, the graphical user interface generated on the mobile device does not have to change its look-and-feel even if the specific features and options displayed on the interface change as the user selects a different document printing device. For example, while the graphical user interface is generated based on the features and options that are currently available on a particular document processing device, the overall design of the graphical user interface can remain consistent even if the user selected a different document printing device.

Furthermore, the approach allows a user to create a document processing job for virtually any document printing device that has the Internet connectivity with network services.

In addition, the approach allows storing specific job settings data on any repository available to network service to which the user's mobile device has the Internet connectivity, and to reference the specific job settings data stored on the repository using merely a job identifier associated with the specific job settings data.

### 4.0 USING A JOB IDENTIFIER

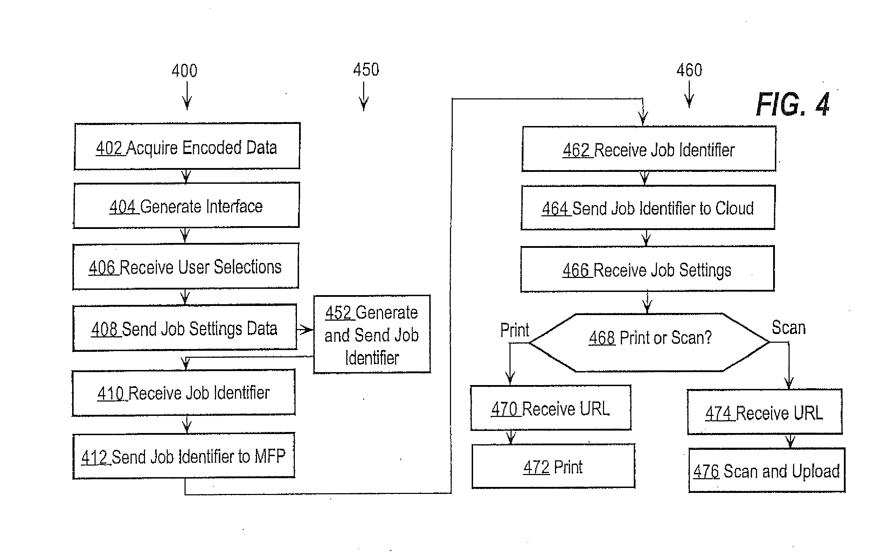

FIG. 4 is a flow diagram depicting an approach for utilizing encoded data and a job identifier according to an embodiment of the invention. As indicated below, some of the steps depicted in the flow diagram can be performed by an application executed on mobile device 108; other steps can be performed by network service 106 and/or one or more other steps can be performed by document processing device 102.

For clarity, in FIG. 4, an element 400 points to steps 402-412 that can be performed by mobile device 108; an element 450 points to step 452 that can be performed by network service 106; and an element 460 points to steps 462-476 that can be performed by document processing device 102.

In an embodiment, steps 402-412 are performed by an application of mobile device 108.

In step 402, an application of mobile device 108 acquires encoded data of document processing device 102 from document processing device 102. In an embodiment, the encoded data can be scanned by a scanner of mobile device 108, transmitted to a decoder of mobile device 108 and interpreted. Alternatively, the encoded data can be photographed by a camera of mobile device 108 and transmitted from the camera to the decoder.

As described above, the encoded data can be encoded/decoded using a variety of techniques, including a quick response (QR) coding.

In an embodiment, the encoded data represent a) features and options that are currently supported by document processing device 102, b) network interface data that mobile device 108 can use to establish a communications link with document processing device 102.

In step 404, an application of mobile device 108 uses the encoded data, and in particular, the information about the features and options that are currently supported by document processing device 102, to generate a graphical user interface (GUI) to provide a graphical representation of the features and options available on document processing device 102. While the GUI provides the representation of the features and options that are specific to document processing device 102, the overall design of the GUI is based on the preferences that the user provided in advance. Therefore, the GUI looks-and-feels similarly to the user regardless of the document processing device that the user selected.

In step 406, an application of mobile device 108, receives user's selections that the user entered using the GUI displayed on mobile device 108. For example, the user could have entered that he wants to print a particular electronic document on an A4-format paper and in color.

In step 408, an application of mobile device 108 processes the user's selections, generates job settings data, and sends the job settings data to network service 106. The application can establish a communications link with network service 106 according to network service interface data provided to mobile device 108 in advance. For example, the network service interface data may comprise an URI of network service 106, which a web-browser based application of mobile device 108 can use to access network service 106. In addition, the web-browser based application of mobile device 108 can also use an API key (also provided in advance) to allow mobile device 108 gaining access to network service 106 if network service 106 is a secure device.

According to another example, the network service interface data may comprise an email address of network service 106, which an email-processing application of mobile device 108 can use to send to network service 106 an email containing the user's selections and the printer's identifier.

In an embodiment, step 452 can be executed by network service 106.

In step 452, network service 106 receives job settings data from mobile device 108. For example, the job settings data can comprise electronic document identification data, such as the electronic document name or a pointer, and the user's selections of the features and options that should be applied when the electronic document is printed.

In an embodiment, network service 106 determines a job identifier for the received job settings data, using one of the methods described above. Network service 106 also associates the generated job identifier with the received job settings data and stores the association of the job identifier with the job settings data in a repository of network service 106. Furthermore, network service 106 sends the job identifier to mobile device 108.

In case of printing, in an embodiment, network service 106 uses the electronic document identification data, included in the received job settings data, to identify a corresponding electronic document, downloads the electronic document to a cache of network service 106, converts the electronic document to a printable electronic document according to the user's selected features and options, and stores the printable electronic document in the queue for document processing device 102.

In an embodiment, steps 410 and 412 are performed by an application of mobile device 108.

In step 410, an application executed on mobile device 108 receives a job identifier from network service 106.

In step 412, an application executed on mobile device 108 sends the job identifier to document processing device 102. In order to send the job identifier, mobile device 108 can establish a communications link with document processing device 102 using network interface data included in encoded data that mobile device 108 scanned of document processing device 102 in step 402. The network interface data may comprise a URI to document processing device 102, an email address to document processing device 102, or any other identifier of the method that mobile device can use to send the job identifier to document processing device 102.

In an embodiment, steps 462-476 are performed by document processing device 102.

In step 462, document processing device 102 sends a job identifier to network service 106. Document processing device 102 may be already configured to establish a communications link with network service 106, or receive, form another device or source, network service interface data for communicating with network service 106.

In step 464, document processing device 102 sends the job identifier to network service 106, using one of the methods described above.

In step 466, document processing device executes a job-polling application and requests job settings data associated with the job identifier from network service 106. For example, the job-polling application can establish a communications link with network service 106 (using for example, a URI of network service 106) and inquire whether network service 106 has stored job settings data in association with the particular job identifier.

In response to the polling, document processing device receives the job settings data associated with the job identifier from network service 106.

In step 468, an application of document processing device 102 parses the received job settings data to determine whether the requested processing job is a printing job or a scanning job. If the requested processing job is a printing job, then the application of document processing device 102 proceeds to step 470; otherwise, the application proceeds to step 474.

In step 470 (printing), an application of document processing device 102 receives an URL of the electronic document to be printed, downloads the electronic document and prepares for the printing of the electronic document data.

In step 472, an application of document processing device 102 starts printing the electronic document data on document processing device 102.

In step 474 (scanning), an application of document processing device 102 receives an URL of the location to which a scanned document should be stored.

In step 476, an application of document processing device 102 verifies whether a hardcopy of the document to be scanned is loaded onto document processing device 102, and if so, scans the hardcopy and stores the scanned electronic document at the location indicated by the URL received in step 474.

### 5.0 IMPLEMENTATION MECHANISMS

According to one embodiment, the techniques described herein are implemented by one or more special-purpose computing devices. The special-purpose computing devices may be hard-wired to perform the techniques, or may include digital electronic devices such as one or more application-specific integrated circuits (ASICs) or field programmable gate arrays (FPGAs) that are persistently programmed to perform the techniques, or may include one or more general purpose hardware processors programmed to perform the techniques pursuant to program instructions in firmware, memory, other storage, or a combination. Such special-purpose computing devices may also combine custom hard-wired logic, ASICs, or FPGAs with custom programming to accomplish the techniques. The special-purpose computing devices may be desktop computer systems, portable computer systems, handheld devices, networking devices or any other device that incorporates hard-wired and/or program logic to implement the techniques.

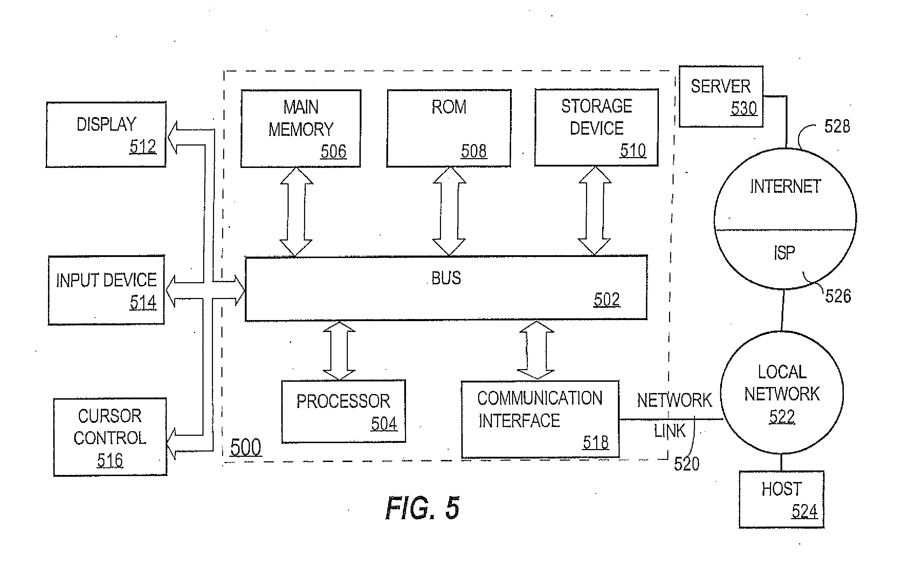

For example, FIG. 5 is a block diagram that illustrates a computer system 500 upon which an embodiment of the invention may be implemented. Computer system 500 includes a bus 502 or other communication mechanism for communicating information, and a hardware processor 504 coupled with bus 502 for processing information. Hardware processor 504 may be, for example, a general purpose microprocessor.

Computer system 500 also includes a main memory 506, such as a random access memory (RAM) or other dynamic storage device, coupled to bus 502 for storing information and instructions to be executed by processor 504. Main memory 506 also may be used for storing temporary variables or other intermediate information during execution of instructions to be executed by processor 504. Such instructions, when stored in non-transitory storage media accessible to processor 504, render computer system 500 into a special-purpose machine that is customized to perform the operations specified in the instructions.

Computer system 500 further includes a read only memory (ROM) 508 or other static storage device coupled to bus 502 for storing static information and instructions for processor 504. A storage device 510, such as a magnetic disk or optical disk, is provided and coupled to bus 502 for storing information and instructions.

Computer system 500 may be coupled via bus 502 to a display 512, such as a cathode ray tube (CRT), for displaying information to a computer user. An input device 514, including alphanumeric and other keys, is coupled to bus 502 for communicating information and command selections to processor 504. Another type of user input device is cursor control 516, such as a mouse, a trackball, or cursor direction keys for communicating direction information and command selections to processor 504 and for controlling cursor movement on display 512. This input device typically has two degrees of freedom in two axes, a first axis (e.g., x) and a second axis (e.g., y), that allows the device to specify positions in a plane.

Computer system 500 may implement the techniques described herein using customized hard-wired logic, one or more ASICs or FPGAs, firmware and/or program logic which in combination with the computer system causes or programs computer system 500 to be a special-purpose machine. According to one embodiment, the techniques herein are performed by computer system 500 in response to processor 504 executing one or more sequences of one or more instructions contained in main memory 506. Such instructions may be read into main memory 506 from another storage medium, such as storage device 510. Execution of the sequences of instructions contained in main memory 506 causes processor 504 to perform the process steps described herein. In alternative embodiments, hard-wired circuitry may be used in place of or in combination with software instructions.

The term "storage media" as used herein refers to any non-transitory media that store data and/or instructions that cause a machine to operation in a specific fashion. Such storage media may comprise non-volatile media and/or volatile media. Non-volatile media includes, for example, optical or magnetic disks, such as storage device 510. Volatile media includes dynamic memory, such as main memory 506. Common forms of storage media include, for example, a floppy disk, a flexible disk, hard disk, solid state drive, magnetic tape, or any other magnetic data storage medium, a CD-ROM, any other optical data storage medium, any physical medium with patterns of holes, a RAM, a PROM, and EPROM, a FLASH-EPROM, NVRAM, any other memory chip or cartridge.

Storage media is distinct from but may be used in conjunction with transmission media. Transmission media participates in transferring information between storage media. For example, transmission media includes coaxial cables, copper wire and fiber optics, including the wires that comprise bus 502. Transmission media can also take the form of acoustic or light waves, such as those generated during radio-wave and infra-red data communications.

Various forms of media may be involved in carrying one or more sequences of one or more instructions to processor 504 for execution. For example, the instructions may initially be carried on a magnetic disk or solid state drive of a remote computer. The remote computer can load the instructions into its dynamic memory and send the instructions over a telephone line using a modem. A modem local to computer system 500 can receive the data on the telephone line and use an infra-red transmitter to convert the data to an infra-red signal. An infra-red detector can receive the data carried in the infra-red signal and appropriate circuitry can place the data on bus 502. Bus 502 carries the data to main memory 506, from which processor 504 retrieves and executes the instructions. The instructions received by main memory 506 may optionally be stored on storage device 510 either before or after execution by processor 504.

Computer system 500 also includes a communication interface 518 coupled to bus 502. Communication interface 518 provides a two-way data communication coupling to a network link 520 that is connected to a local network 522. For example, communication interface 518 may be an integrated services digital network (ISDN) card, cable modem, satellite modem, or a modem to provide a data communication connection to a corresponding type of telephone line. As another example, communication interface 518 may be a local area network (LAN) card to provide a data communication connection to a compatible LAN. Wireless links may also be implemented. In any such implementation, communication interface 518 sends and receives electrical, electromagnetic or optical signals that carry digital data streams representing various types of information.

Network link 520 typically provides data communication through one or more networks to other data devices. For example, network link 520 may provide a connection through local network 522 to a host computer 524 or to data equipment operated by an Internet Service Provider (ISP) 526. ISP 526 in turn provides data communication services through the world wide packet data communication network now commonly referred to as the "Internet" 528. Local network 522 and Internet 528 both use electrical, electromagnetic or optical signals that carry digital data streams. The signals through the various networks and the signals on network link 520 and through communication interface 518, which carry the digital data to and from computer system 500, are example forms of transmission media.

Computer system 500 can send messages and receive data, including program code, through the network(s), network link 520 and communication interface 518. In the Internet example, a server 530 might transmit a requested code for an application program through Internet 528, ISP 526, local network 522 and communication interface 518.

The received code may be executed by processor 504 as it is received, and/or stored in storage device 510, or other non-volatile storage for later execution.

In the foregoing specification, embodiments of the invention have been described with reference to numerous specific details that may vary from implementation to implementation. The specification and drawings are, accordingly, to be regarded in an illustrative rather than a restrictive sense. The sole and exclusive indicator of the scope of the invention, and what is intended by the applicants to be the scope of the invention, is the literal and equivalent scope of the set of claims that issue from this application, in the specific form in which such claims issue, including any subsequent correction.

## Claims

1. A network device comprising:
one or more processors; and
a display for displaying encoded data that represent a) features and options currently supported by the network device, and b) network interface data for the network device, wherein the network interface data allow a mobile device to transmit a job identifier to the network device.

2. The network device of Claim 1, wherein the network device is further configured to transmit the encoded data to the mobile device using a wireless communications link.

3. The network device of Claim 1, wherein the encoded data are displayed in a manner that can be captured by one or more of a scanning device and a camera.

4. The network device of Claim 1, wherein the encoded data are in a machine-readable format.

5. The network device of Claim 1, wherein the display is further configured to display an updated encoded data that are different than the encoded data and that represent a) the features and options currently supported by the network device, and b) updated network interface data for the network device;
wherein the network device is further configured to generate the updated encoded data.

6. The network device of Claim 1, wherein the encoded data are encoded as one or more of: a quick response (QR) code, a bar code, symbols, alphanumeric characters;
wherein the encoded data further comprise an application programming interface key comprising authentication information to validate access to the network device;
wherein the network interface data comprise one or more of: a uniform resource identifier (URI), an email address, a network address.

7. The network device of Claim 1, wherein the network device is further configured to:
receive the job identifier from the mobile device;
generate a request that comprises the job identifier received from the mobile device;
send the request to a network service;
in response to sending the request, receive from the network service, setting selection data that specify one or more user selections of the features and options currently supported by the network device;
use the setting selection data to perform one or more of: printing an electronic document on the network device, and scanning a document and sending scanned data to a destination.

8. One or more storage media storing instructions which, when executed by one or more processors, cause the one or more processors to perform:
displaying encoded data that represent a) features and options currently supported by a network device, and b) network interface data for the network device, wherein the network interface data allow a mobile device to transmit a job identifier from a network service to the network device;
processing print data and causing an electronic document reflected in the print data to be processed by the network device; and
wherein the steps are performed by one or more computing devices that are different than the mobile device and the network service.

9. The storage media of Claim 8, further comprising instructions which, when executed by the one or more processors, cause the one or more processors to perform: transmitting the encoded data to the mobile device using a wireless communications link.

10. The storage media of Claim 8, wherein the encoded data are displayed in a manner that can be captured by one or more scanning devices and one or more cameras.

11. The storage media of Claim 8, wherein the encoded data are in a machine-readable format.

12. The storage media of Claim 8, further comprising instructions which, when executed by the one or more processors, cause the one or more processors to perform:
displaying an updated encoded data that are different than the encoded data and that represent a) the features and options currently supported by the network device, and b) updated network interface data for the network device;
generating the updated encoded data.

13. The storage media of Claim 8, wherein the encoded data are encoded as one or more of: a quick response (QR) code, a bar code, one or more symbols, one or more alphanumeric characters;
wherein the encoded data further comprise an application programming interface key comprising authentication information to validate access to the network device;
wherein the network interface data comprise any of: a uniform resource identifier (URI), an email address, a network address.

14. The storage media of Claim 8, further comprising instructions which, when executed by the one or more processors, cause the one or more processors to perform:
generating a request that comprises the job identifier received from the mobile device;
sending the request to the network service;
in response to sending the request, receiving the print data from the network service;
analyzing the print data to determine a manner in which the electronic document reflected in the print data needs to processed, and process the electronic document according to the print data;
wherein the processing includes any of: printing the electronic document on the network device, scanning a hardcopy of a document to memory of the network device and sending the scanned document to a destination identified for the electronic document, and optical character recognition (OCR) processing of the electronic document.

15. A mobile device for use with the network device of Claim 1, the mobile device comprising:
one or more processors;
an encoded data receiver configured to receive encoded data; and
an encoded data processor configured to process the received encoded data to obtain data that represent a) features and options currently supported by a network device, b) network interface data for the network device, wherein the network interface data allow a mobile device to transmit a job identifier from a network service to the network device.
